# FASCICULE DE BREVET EUROPEEN

(11) **EP 2 906 326 B1**
(45) Date de publication et mention de la délivrance du brevet: **10.04.2019**
(21) Numéro de dépôt: 13786700.8
(22) Date de dépôt: 10.10.2013
(51) Int. Cl.: B01D 46/00, B01D 46/40

(54) **ENSEMBLE DE PIEGEAGE DE PARTICULES EN SUSPENSION DANS UN FLUIDE**
ANORDNUNG ZUM EINFANGEN VON IN EINER FLÜSSIGKEIT SUSPENDIERTEN PARTIKELN
ASSEMBLY FOR TRAPPING PARTICLES SUSPENDED IN A FLUID

(30) Priorité: 10.10.2012 FR 1259655
(43) Date de publication de la demande: 19.08.2015
(73) Titulaire: Institut National de Recherche en Sciences et Technologies pour l'Environnement et l'Agriculture (IRSTEA), 92160 Antony (FR); Centre Scientifique et Technique du Batiment, 77420 Champs sur Marne (FR)
(72) Inventeur: CARLIER, Johan, 35235 Thorigne Fouillard (FR); ARROYO, Georges, 35590 Saint-Gilles (FR); GEORGEAULT, Philippe, 35630 Vignoc (FR); GUIBERT, Anthony, 35000 Rennes (FR); LOUBAT, Michel, 35000 Rennes (FR); WALLIAN, Laurence, 35750 Saint Gonlay (FR)
(74) Mandataire: Dutreix, Hugues Ours
(86) Numéro de dépôt international: PCT/FR2013/052424
(87) Numéro de publication internationale: WO 2014/057225

(56) Documents cités:
- EP-A1- 0 914 855
- WO-A1-2011/013121
- FR-A1- 2 154 580
- FR-A1- 2 901 151
- US-A- 5 268 011
- US-A1- 2005 000 201

## Description

La présente invention concerne de manière générale le piégeage de particules en suspension dans un fluide.

L'invention concerne plus particulièrement un ensemble de piégeage de particules en suspension dans un fluide comprenant un conduit de circulation dudit fluide, et un dispositif de piégeage de particules en suspension dans ledit fluide.

On connait de l'état de la technique différents types de dispositifs de piégeage de particules en suspension dans un fluide. Certains dispositifs de piégeage connus utilisent un liquide pour piéger les particules, ce qui les rend difficilement utilisables pour des raisons hygiéniques. D'autres dispositifs de piégeage connus fonctionnent par piégeage électrostatique, ce qui pose des problèmes de sécurité et d'adaptation technique du fait de leur incompatibilité avec les milieux humides, en particulier les fluides avec une hygrométrie relative supérieure à 70%. Les particules en suspension dans un fluide peuvent aussi être dénommées aérosol.

D'autres dispositifs connus utilisent un média filtrant coûteux en installation et en entretien mais ne sont pas utilisables avec des fluides à forte hygrométrie et engendrent des pertes de charge importantes qui induisent des consommations énergétiques et des coûts de fonctionnement élevés. En outre, d'autres dispositifs de piégeage connus comprennent un cyclone qui se révèle très encombrant. Enfin, de tels dispositifs connus de l'état de la technique s'avèrent peu efficaces pour piéger des particules de diamètre compris entre 1 et 10 µm.

On connait du document EP0914855 une installation comprenant un conduit de circulation de fluide contenant une pluralité de déflecteurs creux perforés destiné à séparer et récupérer les gouttelettes d'eau du flux de fluide au cours de sa déviation par lesdits déflecteurs. Cependant, si une telle installation permet, par déviation du fluide, de séparer et de récupérer les gouttelettes du fluide, cette installation n'est pas adaptée à la récupération des particules solides en suspension dans le fluide.

Le document WO2011013121 décrit une conduite de circulation de fluide munie d'un système de filtres qui comprend un bloc amont formé de plusieurs couches de matériau filtrant, à travers lequel sont ménagés des canaux axiaux de passage du fluide et un bloc aval formé de plusieurs couches de matériau filtrant dépourvu de canaux axiaux de passage de fluide. Ces blocs et en particulier le bloc aval s'étendent en travers de la section du conduit de sorte qu'ils génèrent une perte de charge très importante.

Le document US2005000201 divulgue un dispositif de piégeage de particules dont la conception et la distribution des pièges impliquent une perte de charge importante du fluide circulant entre l'entrée et la sortie du dispositif.

Le document FR2901151 divulgue un séparateur de particules qui comporte une pluralité de parois perméables courbes.

La présente invention a pour but de proposer un dispositif de piégeage de particules permettant de résoudre tout ou partie des problèmes énoncés ci-dessus.

La présente invention a en particulier pour but de proposer un dispositif permettant de piéger des particules en suspension dans un fluide circulant dans un conduit, en particulier des particules de diamètre compris entre 1 et 10 µm, tout en limitant les pertes de charge du fluide et les consommations d'énergie associées du fluide dans ce conduit.

Un autre but est également de proposer un tel dispositif de piégeage de particules en suspension dans un fluide qui permet aussi de réduire le risque de relargage humide, et de simplifier le nettoyage et la maintenance. L'invention vise aussi à réduire le coût de fabrication et de montage d'un tel dispositif.

A cet effet, l'invention a pour objet un ensemble de piégeage de particules en suspension dans un fluide comprenant un conduit de circulation dudit fluide, et un dispositif de piégeage de particules en suspension dans ledit fluide, caractérisé en ce que ledit dispositif de piégeage comprend :
- une plaque plane présentant une surface de collecte qui est poreuse et parallèle à l'axe du conduit, et
- des moyens de génération de turbulence qui s'étendent en saillie par rapport au plan moyen de la surface de collecte et qui sont aptes à rendre turbulent l'écoulement dudit fluide au niveau de la surface de collecte.

La porosité de la surface de collecte permet de favoriser le flux de fluide à travers la surface de collecte et ainsi d'augmenter les impacts de particules sur la surface de collecte au cours de l'écoulement turbulent du fluide au niveau de ladite surface de collecte.

En particulier, la présence de tels moyens de génération de turbulence saillants, permet qu'au moins une partie du flux de fluide incident vienne frapper la surface de collecte tout en limitant la perte de charge du fluide à travers le conduit.

En effet, le mouvement tourbillonnaire généré en amont et à proximité de la surface de collecte par les moyens de génération de turbulence, qui s'étendent en saillie du plan moyen de la plaque, permet à la portion turbulente du flux de fluide de venir frapper la surface de collecte avec un impact suffisant pour permettre audit tourbillon de traverser les pores qui retiennent alors les parties solides transportées par lesdits tourbillons.

La réalisation du dispositif selon l'invention, sous forme d'un média filtrant sensiblement plan et parallèle par rapport à l'axe du conduit, permet de capter les petites particules sans nécessiter un apport de fluide et/ou d'énergie particulier. Le dispositif est particulièrement adapté pour la capture des particules fines de diamètre aérodynamique de 1 à 10 µm.

Le dispositif selon l'invention est peu encombrant et s'installe facilement dans un conduit de réseau d'aération ou d'extraction d'air, car il est adaptable à différents volumes internes de canalisation. Grâce à l'orientation de la surface de collecte parallèlement à l'axe du conduit, ledit dispositif ne modifie que faiblement le flux moyen incident, au contraire des systèmes connus de type "cyclone" ou "chicane", ce qui limite les pertes de charge.

Selon une caractéristique avantageuse de l'invention, les moyens de génération de turbulence comprennent une pluralité d'obstacles au flux de fluide qui sont agencés le long d'au moins la moitié, de préférence d'au moins les deux tiers, de la longueur du bord d'attaque de la plaque présentant la surface de collecte, !a partie desdits moyens de génération de turbulence contenue dans le plan moyen passant par la plaque étant éventuellement écartée en amont de ladite plaque.

Selon une caractéristique avantageuse de l'invention, le cercle inscrit dans chacun des pores de la surface de collecte présente un diamètre d'au plus 3 millimètres et d'au moins 10 micromètres, ledit diamètre de cercle étant de préférence de l'ordre de 300 micromètres.

Le cercle inscrit dans un pore correspond au cercle de plus grand diamètre possible inclus dans la surface délimitée par le pore.

Selon une caractéristique avantageuse de l'invention, ladite pluralité d'obstacles comprend une série de premiers obstacles et une série de deuxièmes obstacles répartis de manière alternée avec les premiers obstacles, chaque premier obstacle présentant une hauteur par rapport au plan moyen passant par la surface de collecte qui est supérieure à celle du deuxième obstacle.

Selon une caractéristique avantageuse de l'invention, la hauteur des sommets des obstacles est comprise entre 0, 3 et 3 centimètres.

Selon une caractéristique avantageuse de l'invention, la distance entre les sommets de deux obstacles de même hauteur est comprise entre 0, 3 et 3 centimètres.

Selon une caractéristique avantageuse de l'invention, chaque obstacle est incliné, de préférence de 45°, par rapport au plan moyen de la surface de collecte de la plaque, de sorte que la base de l'obstacle se situe en amont du sommet dudit obstacle par référence au sens d'écoulement du fluide.

Selon une caractéristique avantageuse de l'invention, au moins une partie desdits obstacles présente un sommet en pointe.

Selon une caractéristique avantageuse de l'invention, lesdits obstacles comprennent des obstacles s'étendant en saillie d'un côté du plan moyen de la plaque et, de préférence de manière symétrique, des obstacles qui s'étendent en saillie du côté opposé au plan moyen de la plaque.

Selon une caractéristique avantageuse de l'invention, lesdits obstacles forment un motif répété périodiquement.

Selon une caractéristique avantageuse de l'invention, les moyens de génération de turbulence sont formés d'une plaque découpée, et éventuellement pliée, ladite ligne de pli s'étendant de préférence le long du bord d'attaque de la plaque présentant la surface de collecte.

Selon une caractéristique avantageuse de l'invention, la distance, prise suivant l'axe du conduit, entre le bord d'attaque de la plaque présentant ladite surface de collecte et la partie desdits moyens de génération contenue dans le plan moyen de la plaque est comprise entre 0 centimètre et 3 centimètres.

Selon une caractéristique avantageuse de l'invention, le cercle inscrit dans chacun des pores de la surface de collecte présente un diamètre d'au plus 3 millimètres et d'au moins 10 micromètres, ledit diamètre de cercle étant de préférence de l'ordre de 300 micromètres.

Selon une caractéristique avantageuse de l'invention, chacun des pores de la surface de collecte traverse la plaque et débouche au niveau de la surface de la plaque opposée à ladite surface de collecte.

Selon une caractéristique avantageuse de l'invention, lesdits moyens de génération de turbulence sont distincts de la surface de collecte et disposés en amont du bord d'attaque de la surface de collecte.

En variante, on peut prévoir que lesdits moyens de génération de turbulence soient formés d'une seule pièce avec ladite surface de collecte.

Selon une caractéristique avantageuse de l'invention, lesdits moyens de génération sont formés par découpe et, de préférence, par pli du bord amont de la surface de collecte.

Selon une caractéristique avantageuse de l'invention, lesdits moyens de génération de turbulence comprennent un élément saillant par rapport au plan moyen de la surface de collecte.

Selon une caractéristique avantageuse de l'invention, ledit élément saillant s'étend de manière continue suivant un axe orthogonal à l'axe du conduit et parallèle au plan de la surface de collecte.

Ledit élément saillant peut être formé par un cylindre transversal à l'axe du conduit. Le cylindre peut être de différentes formes, par exemple circulaire, muni de picots ou pointes. Le cylindre peut ainsi être un cylindre de section variable ou constante.

Selon une caractéristique avantageuse de l'invention, ledit élément saillant s'étend de manière discontinue suivant un axe orthogonal à l'axe du conduit et parallèle au plan de la surface de collecte.

On peut aussi prévoir que lesdits moyens de génération se présentent sous forme générale d'un cylindre muni de gorges ou d'échancrures espacées le long de l'axe du cylindre de manière à former entre les gorges ou échancrures une pluralité d'organes saillants de type anneaux.

Selon une caractéristique avantageuse de l'invention, ledit élément saillant présente une section transversale en V dont l'ouverture est dirigée vers la surface de collecte, la pointe dudit V étant orientée en direction du flux de fluide incident.

Selon une caractéristique avantageuse de l'invention, la surface de collecte est formée par un maillage d'éléments allongés, lesdits pores étant formés par les vides de mailles.

Selon une caractéristique avantageuse de l'invention, ledit dispositif de piégeage comprend une pluralité de surfaces de collecte.

Selon une caractéristique avantageuse de l'invention, ledit ensemble comprend au moins une, de préférence plusieurs, rangée(s) de dispositifs de piégeage, la ou chaque rangée s'étendant transversalement à l'axe du conduit.

L'ensemble comprend ainsi une pluralité de dispositifs de piégeage, ce qui rend l'ensemble modulaire puisque l'on peut adapter le nombre et la répartition des dispositifs de piégeages à une large gamme de sections de conduites ou de caissons traversé(e)s par le fluide dont on souhaite capter les particules. Selon une caractéristique avantageuse de l'invention, lesdites rangées sont décalées l'une par rapport à l'autre suivant une direction parallèle à la direction selon laquelle s'étend chaque rangée, de sorte que chaque dispositif d'une rangée ne se situe pas en regard d'un dispositif de l'autre rangée.

Selon une caractéristique avantageuse de l'invention, l'écartement entre deux plaques, ou entre une plaque et la paroi du conduit, est compris entre un centimètre et quinze centimètres, ou entre deux, ou trois ou quatre fois la hauteur des moyens de génération de turbulence par rapport au plan moyen de la plaque correspondante.

L'invention sera bien comprise à la lecture de la description suivante d'exemples de réalisation, en référence aux dessins annexés dans lesquels :
- la figure 1 est une vue en perspective d'un ensemble selon l'invention montrant une pluralité de dispositifs de piégeage logés dans un conduit;
- la figure 2 est une vue en perspective d'un mode de réalisation d'un dispositif selon l'invention ;
- les figures 2A et 2B illustrent deux modes de réalisation différents des moyens de génération de turbulence ;
- la figure 3 est une vue en perspective d'un autre mode de réalisation d'un dispositif selon l'invention ;
- les figures 3A, 3B, 3C et 3D illustrent quatre autres modes de réalisation différents des moyens de génération de turbulence ;
- la figure 4 est une vue simplifiée d'un dispositif selon l'invention qui schématise l'écoulement en aval d'une partie des moyens de génération de turbulence pour un mode de réalisation du dispositif selon l'invention, du type de celui illustré à la figure 2 ;
- la figure 5 est une vue simplifiée d'un dispositif selon l'invention qui schématise l'écoulement en aval d'une partie des moyens de génération de turbulence pour un mode de réalisation du dispositif selon l'invention, du type de celui illustré à la figure 3.

Le dispositif de piégeage de particules selon l'invention trouve une application particulièrement avantageuse dans l'industrie, mais également dans le tertiaire et le bâtiment, pour le piégeage de particules fines contenues dans l'air en limitant les coûts de fabrication, d'installation, de maintenance, et de consommation énergétique du dispositif. Le dispositif selon l'invention peut aussi être utilisé pour d'autres applications telles que la métrologie des aérosols.

En référence aux figures et comme rappelé ci-dessus, l'invention concerne un ensemble de piégeage de particules en suspension dans un fluide comprenant un conduit 1 de circulation de fluide 5 et un dispositif 2 de piégeage de particules en suspension dans ledit fluide 5. Ledit conduit 1 de circulation de fluide 5 peut être de section ronde ou autre, telle que carrée ou rectangulaire.

Ledit dispositif 2 de piégeage comprend une plaque poreuse présentant une surface de collecte 3 parallèle à l'axe A1 du conduit 1. Comme détaillé ci-après ladite surface de collecte est destinée à piéger des particules du fluide dans les pores. La surface opposée de la plaque peut aussi former une surface de collecte. Autrement dit, les surfaces opposées de la plaque sont poreuses de manière à permettre de piéger dans les pores des particules du fluide. Ledit dispositif comprend aussi des moyens de génération 4 de turbulence aptes à rendre turbulent l'écoulement dudit fluide 5 au niveau de la surface de collecte 3.

L'axe du conduit correspondant à la ligne moyenne du conduit qui relie l'entrée et la sortie dudit conduit, de sorte que, après passage de part et d'autre de la plaque, le fluide continue son parcours dans le conduit avec une perte de charge limitée.

La plaque est une plaque autoporteuse, c'est-à-dire qui se tient d'elle-même ou rigide, de part et d'autre de laquelle le flux de fluide est apte à passer avec une perte de charge réduite, par opposition à des dispositifs connus de l'état de la technique comprenant un filtre formé d'un bloc de couches filtrantes qui s'étend en travers du conduit.

Le conduit et le dispositif de piégeage sont agencés de sorte que le fluide est apte à passer librement de chaque côté de la plaque. Ladite plaque est écartée de tout autre élément (autre plaque ou conduit) suivant une direction orthogonale à la plaque d'une distance d'au moins deux, trois ou quatre fois la hauteur desdits moyens de génération de turbulence par rapport au plan moyen de la plaque.

Lesdits moyens de génération de turbulence sont configurés pour imprimer à l'écoulement de fluide 5 qui arrive sensiblement parallèlement à la surface de collecte 3, une composante transversale au plan de la surface de collecte sur au moins une portion de l'écoulement qui correspond de préférence à la longueur axiale de la surface de collecte.

Les moyens de génération 4 de turbulence sont agencés le long d'au moins la moitié, de préférence d'au moins les deux tiers, de la longueur du bord d'attaque de la plaque présentant la surface de collecte 3. Le bord d'attaque de la surface correspond au bord de la surface en regard avec le flux incident. Ce bord s'étend transversalement à l'axe du conduit et donc transversalement au flux incident.

La partie desdits moyens de génération 4 de turbulence contenue dans le plan moyen passant par la plaque peut être écartée en amont de ladite plaque. Préférentiellement, la distance, prise suivant l'axe du conduit 1, entre le bord d'attaque de la plaque présentant ladite surface de collecte 3 et la partie desdits moyens de génération 4 contenue dans le plan moyen de la plaque est comprise entre 0 centimètre et 3 centimètres.

Lesdits moyens de génération comprennent une pluralité d'obstacles 401, 402 au flux de fluide qui sont répartis parallèlement au bord d'attaque. Lesdits obstacles forment des obstacles à la trajectoire du fluide de manière à créer une turbulence locale au niveau de la plaque. Avantageusement, les moyens de génération de turbulence, ou les obstacles correspondants, s'étendent suivant toute la longueur dudit bord d'attaque de la plaque. Chaque obstacle comprend un sommet correspondant à l'extrémité libre dudit obstacle et une base qui correspond à la zone de liaison entre l'obstacle et le corps des moyens de génération qui porte les autres obstacles.

La hauteur d'un obstacle correspond à la distance du sommet de l'obstacle par rapport au plan moyen de la surface de collecte correspondante de la plaque.

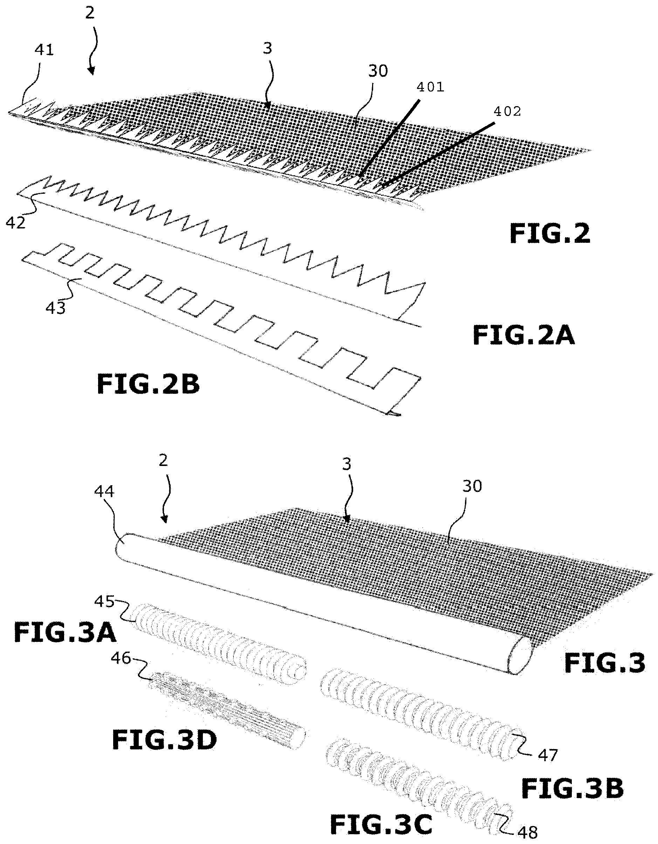

Selon certains modes de réalisation dont celui illustré à la figure 2, ladite pluralité d'obstacles 401, 402 comprend une série de premiers obstacles 401 et une série de deuxièmes obstacles 402 répartis de manière alternée avec les premiers obstacles, chaque premier obstacle 401 présentant une hauteur par rapport au plan moyen passant par la surface de collecte 3 qui est supérieure à celle du deuxième obstacle 402.

Préférentiellement, la hauteur des sommets des obstacles est comprise entre 0,3 et 3 centimètres. Avantageusement, la distance entre les sommets de deux obstacles 401 de même hauteur est comprise entre 0, 3 et 3 centimètres.

Selon des modes de réalisation particuliers de l'invention, chaque obstacle est incliné, de préférence de 45°, par rapport au plan moyen de la plaque (ou de la surface de collecte), de sorte que la base de l'obstacle se situe en amont du sommet dudit obstacle par référence au sens d'écoulement du fluide. Autrement dit, en projection dans le plan moyen de la plaque le sommet de l'obstacle est plus proche du centre de la plaque que la base dudit obstacle. Ainsi, par référence au sens d'écoulement du fluide, le point (c'est-à-dire la base) de l'obstacle 401 ou 402 le plus proche du plan moyen de la plaque 3, suivant la direction orthogonale audit plan moyen de la plaque, se situe en amont du point (c'est-à-dire du sommet) dudit obstacle 401 ou 402 le plus éloigné du plan moyen de la plaque 3, suivant la direction orthogonale audit plan moyen de la plaque 3.

Selon certains modes de réalisation dont ceux illustrés aux figures 2 et 2A, au moins une partie, de préférence l'ensemble, desdits obstacles 401, 402 présente un sommet en pointe.

Selon plusieurs modes de réalisation, lesdits obstacles 401, 402 comprennent des obstacles s'étendant en saillie d'un côté du plan moyen de la plaque et des obstacles qui s'étendent en saillie du côté opposé au plan moyen de la plaque. Ainsi lesdits obstacles 401, 402 s'étendent en saillie de chacune des surfaces opposées de ladite plaque. En variante, lesdits obstacles peuvent s'étendre d'un même côté du plan moyen de la plaque.

Avantageusement, lesdits obstacles 401, 402 forment un motif répété périodiquement suivant une direction parallèle au bord d'attaque de la plaque, c'est-à-dire une direction orthogonale à l'axe du conduit et contenue dans le plan moyen de la plaque. La répétition périodique permet un piégeage sensiblement uniforme des particules du fluide sur la largeur de la plaque.

Préférentiellement, le plan moyen passant par la plaque qui présente ladite surface de collecte forme un plan de symétrie desdits moyens de génération de turbulence.

Les moyens de génération 4 de turbulence peuvent être formés d'une plaque découpée, et éventuellement pliée, ladite ligne de pli s'étendant de préférence le long du bord d'attaque de la plaque présentant la surface de collecte. Dans ce cas les motifs issus de la découpe forment lesdits obstacles.

L'inclinaison de chaque obstacle dans le sens d'un positionnement du sommet de l'obstacle plus proche de la plaque que la base de l'obstacle, permet de réduire la perte de charge grâce à la pente formée par l'inclinaison, tout en générant une turbulence localisée à proximité de la plaque qui est apte à impacter la surface de collecte poreuse de la plaque pour piéger les particules contenues dans le fluide.

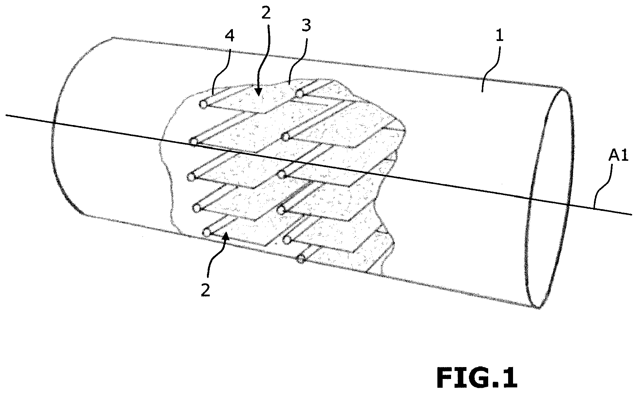

Dans l'exemple illustré à la figure 1, le conduit 1 loge une paire de rangées de dispositifs de piégeage réparties le long de l'axe du conduit. Chaque rangée s'étend transversalement à l'axe du conduit 1. Lesdites rangées sont décalées l'une par rapport à l'autre suivant une direction parallèle à la direction selon laquelle s'étend chaque rangée. Ainsi, chaque rangée est décalée transversalement par rapport à l'autre rangée de sorte que lesdits dispositifs sont positionnés en quinconce.

De cette façon, on peut optimiser la relation entre le nombre de dispositifs de piégeage, la perte de charge et le captage de particules dans toute la section de l'écoulement. Bien entendu, ledit conduit peut loger un plus grand nombre de rangées de dispositifs de piégeage.

En outre, lesdits moyens de génération de turbulence peuvent être communs à plusieurs surfaces de collecte. Autrement dit, dans ce cas, ledit dispositif de piégeage comprend une pluralité de plaques et donc de surfaces de collecte.

Avantageusement, la surface de collecte de chaque dispositif de piégeage s'étend sur au moins 50% de la largeur du conduit.

L'écartement entre deux plaques 3, ou entre une plaque 3 et la paroi du conduit 1, est compris entre un centimètre et quinze centimètres, ou entre deux, ou trois ou quatre fois la hauteur des moyens de génération 4 de turbulence par rapport au plan moyen de la plaque correspondante.

La description ci-dessous est réalisée pour un dispositif logé dans le conduit mais s'applique aussi à une pluralité de dispositifs logée dans le conduit.

La plaque et en particulier la surface de collecte 3 du dispositif 2 est poreuse de manière à faire entrer le fluide 5 dans les pores 30 de la surface de collecte 3 et à faire impacter les particules du fluide 5 qui impactent la surface de la surface de collecte 3 au cours de l'écoulement turbulent du fluide 5 au niveau de ladite surface de collecte 3.

Chacun des pores 30 de la surface de collecte 3 est dimensionné de telle sorte que le cercle inscrit dans ledit pore présente un diamètre d'au plus 3 millimètres et d'au moins 10 micromètres. Ledit diamètre de cercle est de préférence de l'ordre de 300 micromètres.

Avantageusement, la porosité de la plaque (ou surface de collecte) est supérieure à 30% pour favoriser le passage d'air au travers des vides, et tirer parti des fluctuations de vitesse transversale renforcées par les moyens de génération de turbulence. La porosité est définie comme le rapport de la surface cumulée des pores sur la surface totale de la surface de collecte.

L'axe du conduit peut être curviligne.

Les moyens de génération de turbulence permettent de créer un mouvement local de fluide perpendiculaire à la surface traversante, pour amener par convection les particules à proximité de cette surface, alors que le flux de fluide reste sensiblement parallèle à la surface de collecte.

La turbulence ainsi générée au voisinage de la surface de collecte poreuse crée des mouvements de fluide intermittents, transverses à l'écoulement dominant, qui favorisent le déplacement des particules jusqu'à la surface de collecte, puis leur capture par cette surface. Ces fluctuations transverses sont d'autant moins amorties et d'autant plus efficaces que la surface de collecte est poreuse.

Une fois qu'une particule est proche de la surface de collecte, d'autres forces que la force d'inertie, par exemple la force électrostatique, peuvent favoriser le contact et le maintien de la particule sur la surface de collecte.

Le dispositif selon l'invention permet ainsi le piégeage de particules fines en suspension dans un fluide, tel que l'air, en limitant les coûts de fabrication, d'installation et de maintenance du dispositif.

La surface de collecte est distincte de la paroi du conduit. Ladite surface de collecte s'étend transversalement à ladite paroi du conduit.

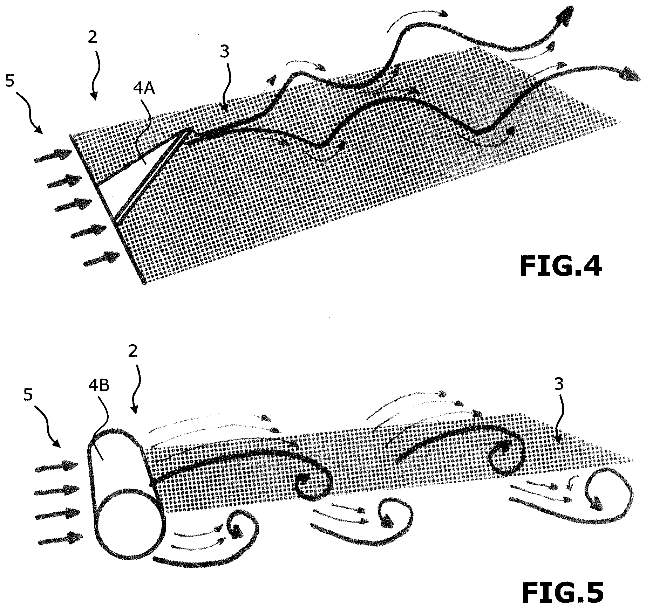

Avantageusement, lesdits moyens de génération de turbulence sont agencés pour générer à partir du flux de fluide 5 incident des tourbillons longitudinaux hélicoïdaux (figure 4), comme ceux des couches limites de surface ou des sillages d'ailes delta, et/ou des enroulements transversaux, comme ceux des allées tourbillonnaires de sillages de cylindres (figure 5).

La figure 4 schématise l'écoulement sur la surface de collecte en aval d'une dent 4A formant une partie desdits moyens de génération de turbulence pour un mode de réalisation du dispositif selon l'invention du type de celui illustré à la figure 2.

La figure 5 schématise l'écoulement en aval d'un cylindre 4B qui forme lesdits moyens de génération de turbulence pour un mode de réalisation du dispositif selon l'invention, du type de celui illustré à la figure 3. On peut prévoir que le dispositif selon l'invention présente des moyens de génération de turbulence configurés pour obtenir un écoulement aval sur la surface de collecte qui combine des tourbillons longitudinaux hélicoïdaux et des enroulements transversaux.

Dans l'exemple illustré aux figures, lesdits moyens de génération 4 de turbulence sont distincts de la surface de collecte 3 et disposés en amont du bord d'attaque de la surface de collecte. Le bord d'attaque est le bord amont de la surface de collecte 3 qui s'étend transversalement à l'écoulement.

On peut prévoir que lesdits moyens de génération de turbulence soient écartés de la surface de collecte 3 de manière à laisser un espace entre ladite surface de collecte 3 et lesdits moyens de génération 4 de turbulence. On peut aussi prévoir que lesdits moyens de génération 4 de turbulence soient juxtaposés à la surface de collecte 3.

Avantageusement, quel que soit le positionnement écarté ou accolé à la surface de collecte 3, les moyens de génération 4 de turbulence sont alignés selon le bord d'attaque de la surface de collecte.

De cette façon, lesdits moyens de génération constituent un obstacle de petite dimension face au flux de fluide incident, et génèrent donc de la turbulence localisée le long de la surface de collecte 3.

Selon une variante de réalisation non illustrée aux figures, lesdits moyens de génération 4 de turbulence sont formés d'une seule pièce avec ladite surface de collecte 3. On peut dans ce cas prévoir que lesdits moyens de génération 4 soient formés par découpe en pointes et, de préférence, par plis du bord amont de la surface de collecte 3.

Lesdits moyens de génération 4 de turbulence comprennent un élément saillant par rapport au plan moyen de la surface de collecte 3. Ledit élément saillant s'étend de préférence de part et d'autre dudit plan moyen de la surface de collecte 3.

Selon un mode de réalisation illustré à la figure 3, l'élément saillant 44 s'étend de manière continue suivant un axe orthogonal à l'axe du conduit 1 et parallèle au plan de la surface de collecte. Ainsi dans l'exemple de la figure 3, ledit élément saillant 44 est formé d'un cylindre continu.

En variante, comme illustré plus particulièrement aux figures 3A à 3C, ledit élément saillant peut s'étendre de manière discontinue suivant un axe orthogonal à l'axe du conduit 1 et parallèle au plan de la surface de collecte 3.

Ainsi dans l'exemple de la figure 3A, l'élément saillant 45 est formé de plusieurs tronçons de cylindre espacés les uns des autres. Dans l'exemple de la figure 3B, l'élément saillant 47 comprend un cylindre le long duquel sont ménagées plusieurs gorges en V. Dans l'exemple de la figure 3C, l'élément saillant 48 est formé de plusieurs tronçons de cylindre espacés les uns des autres et biseautés latéralement.

Dans l'exemple illustré à la figure 3D, l'élément saillant 46 est formé d'un cylindre muni de picots.

Selon un autre mode de réalisation illustré à la figure 2, l'élément saillant 41 comprend une pluralité de dents. En particulier, comme illustré aux figures 2A et 2B, on peut prévoir que lesdits moyens de génération 4 de turbulence présentent une section transversale en V renversé dont l'ouverture est dirigée vers la surface de collecte, la pointe dudit V étant orientée en direction du flux de fluide incident, c'est-à-dire du côté opposé à la surface de collecte.

En variante, on pourrait prévoir que les branches du « V » forment entre elles un angle plus important, c'est-à-dire un angle supérieur ou égal à 180°.

Dans l'exemple illustré aux figures 2A et 2B, le bord amont de la surface de collecte est logé entre les deux branches du V ou à écartement dudit V. Au moins l'une de préférence chacune des extrémités des branches du V présente suivant une direction transversale à l'axe du conduit une forme accidentée. Cette forme accidentée est obtenue par découpe, régulière ou irrégulière, en dents de scie (figure 2A) et/ou en créneaux (figure 2B).

Dans les exemples illustrés aux figures, lesdits moyens de génération 4 de turbulence débordent, de préférence de quelques millimètres, dans la direction perpendiculaire au plan moyen de la surface de collecte, de part et d'autre de celui-ci.

Selon un mode de réalisation avantageux de l'invention, la surface de collecte 3 est formée par un maillage d'éléments allongés, de préférence des fils ou fibres, ou en variante des bandelettes. Les pores 30 de la surface de collecte sont alors formés par les vides de mailles. Avantageusement, chaque vide a une dimension caractéristique comprise entre 120 et 900 micromètres. Ladite dimension caractéristique correspond de préférence au diamètre du cercle inscrit dans ledit vide.

Ainsi, la surface de collecte est avantageusement obtenue par tissage selon une trame et une chaîne à espacement régulier, avec des fils de même matière (par exemple plastique ou métallique) et de même diamètre selon la trame et la chaîne. En variante, ladite surface de collecte peut aussi présenter une hétérogénéité de fils (matière, section et diamètre) ou être obtenue à partir d'un autre procédé de mise en oeuvre de ces fils (tricot, non tissé).

Le maillage est de préférence confectionné à partir de fils ou fibres dont le diamètre est compris entre 60 et 400 micromètres. La section circulaire des fils ou fibres, ainsi que leur mode d'assemblage, favorisent l'impact des particules sur la surface de collecte.

En variante, cette surface de collecte peut être formée par une plaque percée. On peut aussi prévoir que ladite surface de collecte soit formée par une toile métallique.

Ainsi, le dispositif selon l'invention comprend des moyens de génération de turbulence dont la fonction est de favoriser les mouvements de fluide locaux, perpendiculaires au flux de fluide incident, sur la surface de collecte. Le dispositif est en outre dimensionné et positionné dans le conduit de sorte à minimiser les pertes de charge. La surface de collecte poreuse permet l'impact et la rétention des particules supermicroniques. En outre, la porosité de la surface de collecte assure la circulation de l'air de part et d'autre de cette surface. L'orientation de la surface de collecte sensiblement parallèle au flux incident limite la perte de charge dans le conduit.

Avantageusement, chaque dispositif est démontable par rapport au conduit de circulation, ce qui permet de simplifier le nettoyage et la maintenance de l'ensemble de piégeage de particules. Selon certains modes de réalisation, on peut aussi prévoir que la surface de collecte et les moyens de génération de turbulence soient démontables les uns par rapport aux autres.

## Revendications

1. Ensemble de piégeage de particules en suspension dans un fluide comprenant un conduit (1) de circulation dudit fluide (5), et un dispositif (2) de piégeage de particules en suspension dans ledit fluide (5),
**caractérisé en ce que** ledit dispositif (2) de piégeage comprend :
- une plaque plane présentant une surface de collecte (3) qui est poreuse et parallèle à l'axe du conduit (1), et
- des moyens de génération (4) de turbulence qui s'étendent en saillie par rapport au plan moyen de la surface de collecte (3) et qui sont aptes à rendre turbulent l'écoulement dudit fluide (5) au niveau de la surface de collecte (3).

2. Ensemble selon la revendication 1, **caractérisé en ce que** les moyens de génération (4) de turbulence comprennent une pluralité d'obstacles (401, 402) au flux de fluide qui sont agencés le long d'au moins la moitié, de préférence d'au moins les deux tiers, de la longueur du bord d'attaque de la plaque présentant la surface de collecte (3), la partie desdits moyens de génération (4) de turbulence contenue dans le plan moyen passant par la plaque étant éventuellement écartée en amont de ladite plaque.

3. Ensemble selon la revendication 2, **caractérisé en ce que** ladite pluralité d'obstacles (401, 402) comprend une série de premiers obstacles (401) et une série de deuxièmes obstacles (402) répartis de manière alternée avec les premiers obstacles, chaque premier obstacle (401) présentant une hauteur par rapport au plan moyen passant par la surface de collecte (3) qui est supérieure à celle du deuxième obstacle (402).

4. Ensemble selon l'une des revendications 2 ou 3, **caractérisé en ce que** la hauteur des sommets des obstacles est comprise entre 0, 3 et 3 centimètres.

5. Ensemble selon l'une des revendications 2 à 4, **caractérisé en ce que** la distance entre les sommets de deux obstacles (401) de même hauteur est comprise entre 0, 3 et 3 centimètres.

6. Ensemble selon l'une des revendications 2 à 5, **caractérisé en ce que** chaque obstacle est incliné, de préférence de 45°, par rapport au plan moyen de la surface de collecte de la plaque, de sorte que la base de l'obstacle se situe en amont du sommet dudit obstacle par référence au sens d'écoulement du fluide.

7. Ensemble selon l'une des revendications 2 à 6, **caractérisé en ce qu'**au moins une partie desdits obstacles (401, 402) présente un sommet en pointe.

8. Ensemble selon l'une des revendications 2 à 5, **caractérisé en ce que** lesdits obstacles (401, 402) comprennent des obstacles s'étendant en saillie d'un côté du plan moyen de la plaque et, de préférence de manière symétrique, des obstacles qui s'étendent en saillie du côté opposé au plan moyen de la plaque.

9. Ensemble selon l'une des revendications 2 à 6, **caractérisé en ce que** lesdits obstacles (401, 402) forment un motif répété périodiquement.

10. Ensemble selon l'une des revendications précédentes, **caractérisé en ce que** les moyens de génération (4) de turbulence sont formés d'une plaque découpée, et éventuellement pliée, ladite ligne de pli s'étendant de préférence le long du bord d'attaque de la plaque présentant la surface de collecte.

11. Ensemble selon l'une des revendications précédentes, **caractérisé en ce que** la distance, prise suivant l'axe du conduit (1), entre le bord d'attaque de la plaque présentant ladite surface de collecte (3) et la partie desdits moyens de génération (4) contenue dans le plan moyen de la plaque est comprise entre 0 centimètre et 3 centimètres.

12. Ensemble selon l'une des revendications précédentes, **caractérisé en ce que** le cercle inscrit dans chacun des pores (30) de la surface de collecte (3) présente un diamètre d'au plus 3 millimètres et d'au moins 10 micromètres, ledit diamètre de cercle étant de préférence de l'ordre de 300 micromètres.

13. Ensemble selon l'une des revendications précédentes, **caractérisé en ce que** chacun des pores (30) de la surface de collecte (3) traverse la plaque et débouche au niveau de la surface de la plaque opposée à ladite surface de collecte (3).

14. Ensemble selon l'une des revendications précédentes, **caractérisé en ce que** ledit ensemble comprend au moins une, de préférence plusieurs, rangée(s) de dispositifs de piégeage, la ou chaque rangée s'étendant transversalement à l'axe du conduit (1).

15. Ensemble selon la revendication 14, **caractérisé en ce que** lesdites rangées sont décalées l'une par rapport à l'autre suivant une direction parallèle à la direction selon laquelle s'étend chaque rangée, de sorte que chaque dispositif (2) d'une rangée ne se situe pas en regard d'un dispositif (2) de l'autre rangée.

16. Ensemble selon l'une des revendications précédentes, **caractérisé en ce que** l'écartement entre deux plaques (3), ou entre une plaque (3) et la paroi du conduit (1), est compris entre un centimètre et quinze centimètres, ou entre deux, ou trois ou quatre fois la hauteur des moyens de génération (4) de turbulence par rapport au plan moyen de la plaque correspondante.

## Patentansprüche

1. Anordnung zum Einfangen von in einem Fluid suspendierten Partikeln, umfassend eine Zirkulationsleitung (1) des Fluids (5) und eine Vorrichtung (2) zum Einfangen von in dem Fluid (5) suspendierten Partikeln,
**dadurch gekennzeichnet, dass** die Einfangvorrichtung (2) umfasst:
- eine ebene Platte, aufweisend eine Sammelfläche (3), die porös und parallel zur Achse der Leitung (1) ist, und
- Turbulenzerzeugungsmittel (4), die sich in Bezug auf die mittlere Ebene der Sammelfläche (3) hervorragend erstrecken und die imstande sind, die Strömung des Fluids (5) im Bereich der Sammelfläche (3) turbulent zu gestalten.

2. Anordnung nach Anspruch 1, **dadurch gekennzeichnet, dass** die Turbulenzerzeugungsmittel (4) eine Vielzahl von Hindernissen (401, 402) im Fluidstrom umfassen, die entlang von mindestens der Hälfte, vorzugsweise von mindestens der zwei Dritteln, der Länge der Vorderkante der Platte, welche die Sammelfläche (3) aufweist, ausgebildet sind, wobei der Teil der Turbulenzerzeugungsmittel (4), der in der mittleren Ebene enthalten ist, die durch die Platte verläuft, eventuell oberstromig von der Platte beabstandet ist.

3. Anordnung nach Anspruch 2, **dadurch gekennzeichnet, dass** die Vielzahl von Hindernissen (401, 402) eine Reihe erster Hindernisse (401) und eine Reihe zweiter Hindernisse (402) umfasst, die abwechselnd mit den ersten Hindernissen verteilt sind, wobei jedes erste Hindernis (401) eine Höhe in Bezug auf die mittlere Ebene, die durch die Sammelfläche (3) verläuft, aufweist, die höher als die des zweiten Hindernisses (402) ist.

4. Anordnung nach einem der Ansprüche 2 oder 3, **dadurch gekennzeichnet, dass** die Höhe der Gipfel der Hindernisse zwischen 0,3 und 3 Zentimetern liegt.

5. Anordnung nach einem der Ansprüche 2 bis 4, **dadurch gekennzeichnet, dass** die Distanz zwischen den Gipfeln von zwei Hindernissen (401) derselben Höhe zwischen 0,3 und 3 Zentimetern liegt.

6. Anordnung nach einem der Ansprüche 2 bis 5, **dadurch gekennzeichnet, dass** jedes Hindernis vorzugsweise um 45° in Bezug auf die mittlere Ebene der Sammelfläche der Platte derart geneigt ist, dass sich die Basis des Hindernisses oberstromig zum Gipfel des Hindernisses befindet, bezogen auf die Strömungsrichtung des Fluids.

7. Anordnung nach einem der Ansprüche 2 bis 6, **dadurch gekennzeichnet, dass** mindestens ein Teil der Hindernisse (401, 402) einen spitzen Gipfel aufweist.

8. Anordnung nach einem der Ansprüche 2 bis 5, **dadurch gekennzeichnet, dass** die Hindernisse (401, 402) Hindernisse umfassen, die auf einer Seite der mittleren Ebene der Platte hervorragend erstrecken und vorzugsweise symmetrisch Hindernisse, die sich auf der anderen Seite der mittleren Ebene der Platte hervorragend erstrecken.

9. Anordnung nach einem der Ansprüche 2 bis 6, **dadurch gekennzeichnet, dass** die Hindernisse (401, 402) ein periodisch wiederholtes Motiv bilden.

10. Anordnung nach einem der vorangehenden Ansprüche, **dadurch gekennzeichnet, dass** die Turbulenzerzeugungsmittel (4) von einer ausgeschnittenen und eventuell gefalteten Platte gebildet sind, wobei sich die Faltlinie vorzugsweise entlang der Vorderkante der Platte, welche die Sammelfläche aufweist, erstreckt.

11. Anordnung nach einem der vorangehenden Ansprüche, **dadurch gekennzeichnet, dass** die Distanz, ermittelt gemäß der Achse der Leitung (1), zwischen der Vorderkante der Platte, welche die Sammelfläche (3) aufweist, und dem Teil der Turbulenzerzeugungsmittel (4), der in der mittleren Ebene der Platte enthalten ist, zwischen 0 Zentimetern und 3 Zentimetern beträgt.

12. Anordnung nach einem der vorangehenden Ansprüche, **dadurch gekennzeichnet, dass** der in jede der Poren (30) der Sammelfläche (3) eingeschriebene Kreis einen Durchmesser von höchstens 3 Millimetern und mindestens 10 Mikrometern aufweist, wobei der Kreisdurchmesser vorzugsweise zirka 300 Mikrometer beträgt.

13. Anordnung nach einem der vorangehenden Ansprüche, **dadurch gekennzeichnet, dass** jede der Poren (30) der Sammelfläche (3) die Platte durchquert und im Bereich der Oberfläche der Platte gegenüber der Sammelfläche (3) ausmündet.

14. Anordnung nach einem der vorangehenden Ansprüche, **dadurch gekennzeichnet, dass** die Anordnung mindestens eine, vorzugsweise mehrere Reihe(n) von Einfangvorrichtungen umfasst, wobei sich die oder jede Reihe transversal zur Achse der Leitung (1) erstreckt.

15. Anordnung nach Anspruch 14, **dadurch gekennzeichnet, dass** die Reihen gemäß einer Richtung, die parallel zu der Richtung ist, in der sich jede Reihe erstreckt, zueinander versetzt sind, so dass sich jede Vorrichtung (2) einer Reihe nicht gegenüber einer Vorrichtung (2) der anderen Reihe befindet.

16. Anordnung nach einem der vorangehenden Ansprüche, **dadurch gekennzeichnet, dass** der Abstand zwischen zwei Platten (3) oder zwischen einer Platte (3) und der Wand der Leitung (1) zwischen einem Zentimeter und fünfzehn Zentimetern oder zwischen zwei oder drei oder vier Mal der Höhe der Turbulenzerzeugungsmittel (4) in Bezug auf die mittlere Ebene der entsprechenden Platte liegt.

## Claims

1. An assembly for trapping particles suspended in a fluid comprising a circulation pipe (1) for said fluid (5), and a device (2) for trapping particles suspended in said fluid (5), **characterized in that** said trapping device (2) comprises:
- a planar plate having a collection surface (3) that is porous and parallel to the axis of the pipe (1), and
- turbulence-generating means (4) that extend protruding relative to the mean plane of the collection surface (3) and that are able to make the flow of said fluid (5) turbulent in line with the collection surface (3).

2. The assembly according to claim 1, **characterized in that** the turbulence-generating means (4) comprise a plurality of obstacles (401, 402) to the flow of fluid that are arranged along at least half, preferably at least two thirds, of the length of the leading edge of the plate having the collection surface (3), the part of said turbulence-generating means (4) contained in the mean plane passing through the plate optionally being spaced upstream of said plate.

3. The assembly according to claim 2, **characterized in that** said plurality of obstacles (401, 402) comprises a series of first obstacles (401) and a series of second obstacles (402) distributed alternating with the first obstacles, each first obstacle (401) having a height relative to the mean plane passing through the collection surface (3) that is greater than that of the second obstacle (402).

4. The assembly according to one of claims 2 or 3, **characterized in that** the height of the apices of the obstacles is between 0.3 and 3 centimeters.

5. The assembly according to one of claims 2 to 4, **characterized in that** the distance between the apices of two obstacles (401) of equal height is between 0.3 and 3 centimeters.

6. The assembly according to one of claims 2 to 5, **characterized in that** each obstacle is inclined, preferably by 45°, relative to the mean plane of the collection surface of the plate, such that the base of the obstacle is situated upstream from the apex of said obstacle in reference to the direction of flow of the fluid.

7. The assembly according to one of claims 2 to 6, **characterized in that** at least a portion of said obstacles (401, 402) has a pointed apex.

8. The assembly according to one of claims 2 to 5, **characterized in that** said obstacles (401, 402) comprise obstacles protruding from one side of the mean plane of the plate and, preferably symmetrically, obstacles that protrude from the side opposite the mean plane of the plate.

9. The assembly according to one of claims 2 to 6, **characterized in that** said obstacles (401, 402) form a pattern repeated periodically.

10. The assembly according to one of the preceding claims, **characterized in that** the turbulence-generating means (4) are formed by a cut, and optionally bent, plate, said bending line preferably extending along the leading edge of the plate having the collection surface.

11. The assembly according to one of the preceding claims, **characterized in that** the distance, taken along the axis of the pipe (1), between the leading edge of the plate having said collection surface (3) and the part of said generating means (4) contained in the mean plane of the plate is between 0 centimeters and 3 centimeters.

12. The assembly according to one of the preceding claims, **characterized in that** the circle inscribed in each of the pores (30) of the collection surface (3) has a diameter of no more than 3 millimeters and at least 10 micrometers, said circle diameter preferably being about 300 micrometers.

13. The assembly according to one of the preceding claims, **characterized in that** each of the pores (30) of the collection surface (3) passes through the plate and emerges at the surface of the plate opposite said collection surface (3).

14. The assembly according to one of the preceding claims, **characterized in that** said assembly comprises at least one, preferably several, row(s) of trapping devices, the or each row extending transversely to the axis of the pipe (1).

15. The assembly according to claim 14, **characterized in that** said rows are offset relative to one another in a direction parallel to the direction in which each row extends, such that each device (2) of a row is not situated across from a device (2) of the other row.

16. The assembly according to one of the preceding claims, **characterized in that** the spacing between two plates (3), or between a plate (3) and the wall of the pipe (1), is between one centimeter and fifteen centimeters, or between two, or three or four times the height of the turbulence-generating means (4) relative to the mean plane of the corresponding plate.
